# EUROPEAN PATENT SPECIFICATION

(11) **EP 2 186 760 B1**
(45) Date of publication and mention of the grant of the patent: **07.03.2012**
(21) Application number: 09175911.8
(22) Date of filing: 13.11.2009
(51) Int. Cl.: B65G 59/10

(54) **Destacking member and device for destacking a container stack**
Element und Vorrichtung zum Entstapeln von Behältern
Élément et dispositif de désempilage pour une pile de récipients

(30) Priority: 13.11.2008 FI 20086079
(43) Date of publication of application: 19.05.2010
(73) Proprietor: Antti Lindfors Oy, 61850 Kauhajoki (FI)
(72) Inventor: Ojala, Antti, 61800, Kauhajoki (FI); Välimäki, Rauno, 61800, Kauhajoki (FI); Ylimäki, Arto, 61850, Kauhajoki (FI); Laine, Markku, 61850, Kauhajoki (FI); Harju, Kalevi, 61860, Harja (FI); Taipalus, Seppo, 61850, Kauhajoki (FI); Silander, Martin, 64260, Kaskinen (FI); Nurmela, Jani, 60120, Seinäjoki (FI)
(74) Representative: Niemi, Hakan Henrik

(56) References cited:
- US-A- 3 741 410

## Description

### Background of the invention

The invention relates to destacking container stacks and especially to a destacking member according to claim 1 and a device for destacking a container stack according to claim 10.

On industrial packing lines, for instance, it is typical to feed to destacking equipment a container stack that the equipment then destacks one at a time, and the destacked containers are then fed on to a packing line for packing a product or products into the containers.

According to the prior art, destacking screws are used to destack containers individually. Typically, the destacking screws are positioned in such a manner that they are at each corner of the container, that is, in the case of a rectangular container, for example, four destacking screws would be used. The containers are separated from the stack at the top part of the destacking screw, and each container advances in the thread system of the destacking screw until the bottom part, where it detaches and is discharged to the packing line. The rotational movement of the screws is typically implemented by a belt-drive in such a manner that the destacking screws are rotated by one belt. This type of belt-driven solution is shown in patent publication GB2068916, for instance.
From the publication US 3,741,410 there is known an other embodiment of such a separator unit. This separator unit includes a two- or a three-part rotor formed by destacking screws, the rotation of the rotor pushing containers to be separated downward from an adjacent stack of containers.

A destacking screw solution works moderately in destacking container stacks, in which the distances between the container edges are relatively long and the containers are made of a relatively hard material, such as plastic.

However, the currently used containers vary in structure, which makes it difficult to automatically detach containers from stacks. Different containers require different destacking screws. The destacking screw then needs to be selected and changed to suit the container in question.

### Brief description of the invention

It is an object of the invention to develop equipment in which the above-mentioned problems are eliminated. The object of the invention is achieved with a destacking member and device that are characterised by what is stated in the independent claims. Preferred embodiments of the invention are set forth in the dependent claims.

One subject matter of the invention is a destacking member for destacking a stack of containers.

Another subject matter of the invention is a destacking unit for destacking a stack of containers.

The invention is based on the idea that along the outer rim of the destacking member, there is a steering profile advancing in a thread-like manner for detaching a container from a container stack, the steering profile comprising a container receiving end and a container discharging end, and the container receiving end of the steering profile is formed of a detachably inter-connectable and concentrically rotatable gripping part and moving part, the rotation of which parts changes the shape of the container receiving end of the steering profile.

The steering profile comprises a top surface and a bottom surface, and the rotation of the gripping part and moving part in relation to each other alters the distance between the top and bottom surfaces in the thread-like advancing steering profile at the container receiving end that the gripping part and moving part form together. This way, the destacking member may be adjusted to suit different containers and different distances in the containers.

The gripping part has a thread-like advancing steering profile, such as a flange, that is formed on just a section of the rim of the destacking member. One end of the flange is wedge-shaped and the other end of the flange has a connection section that fastens to a corresponding wedge section in the moving part for the purpose of steering the container with the thread.

The moving part has a steering profile that runs around the entire circumference of the circle at least once. The moving part has a wedge section that settles against the connection section of the gripping part.

According to one aspect, the inside of the moving part of the destacking member has a space that is dimensioned to receive a drive motor, such as stepping motor, rotating the destacking member.

In addition, at each destacking member, there may be a sensor means detecting the rotational location of the destacking member. Each destacking member is rotated with its own stepping motor. This provides the advantage that each destacking member is controlled and monitored individually. This makes it possible to avoid most of fault situations related to detachment of the container and to recover from fault situations under software control so that the user need not take any time-consuming action.

### Brief description of figures

The invention will now be described in greater detail by means of preferred embodiments and with reference to the attached drawings, in which
Figure 1 shows an embodiment of a destacking device for a container stack;
Figure 2 shows parts of the destacking device of Figure 1;
Figure 3 shows a partial view of the destacking device of Figure 1;
Figure 4 shows an embodiment of a destacking unit of a destacking device;
Figure 5 shows parts of the destacking unit of Figure 4;
Figure 6 shows an embodiment of a destacking member of the present invention;
Figure 7 is a sectional view of the destacking member of Figure 6;
Figure 8 shows a gripping part of a destacking member as seen obliquely from below;
Figure 9 shows a moving part of a destacking member as seen obliquely from above;
Figure 10 is a direct side view of a destacking member turned into one adjustment position;
Figure 11 shows a destacking member turned into another adjustment position as seen obliquely from above;
Figures 12 and 13 show the adjustment position of Figure 10 from another direction; and
Figures 14 and 15 show the adjustment position of Figure 11 from another direction.

### Detailed description of the invention

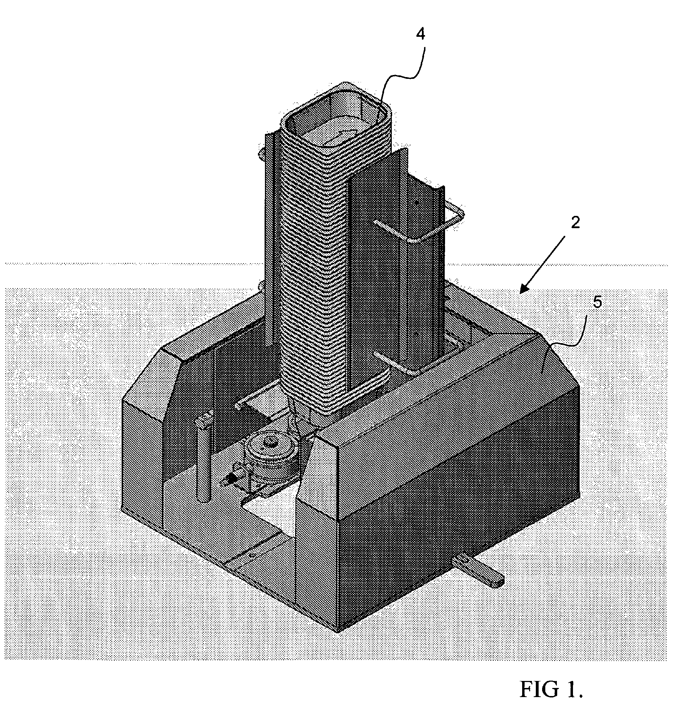

Figure 1 shows one destacking device 2 for container stacks. A container stack consisting of several containers 4 on top of each other is placed upright in the destacking device 2 in such a manner that a detached container 4 is discharged from the destacking device downward on a conveyor (not shown) or the like. The structure of the destacking device 2 is covered with a protective cover 5 for safety reasons.

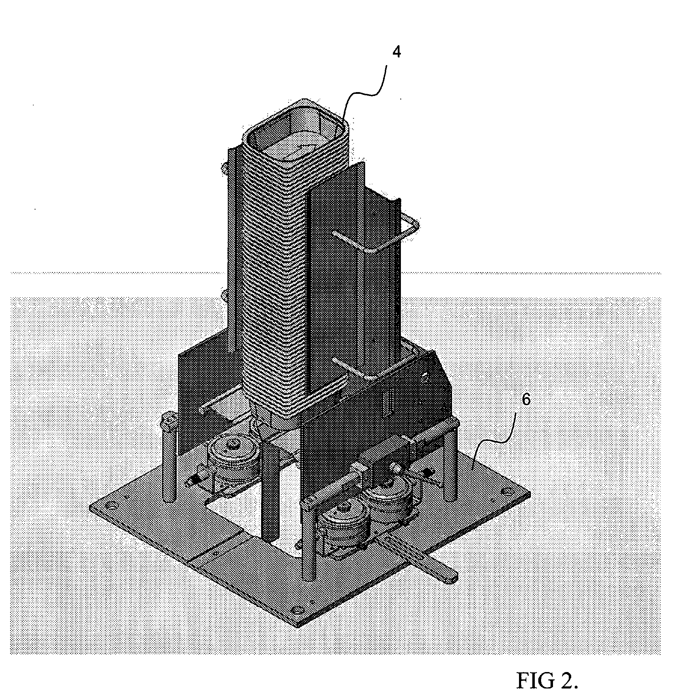

Figure 2 shows the destacking device 2 of Figure 1 without the protective cover. The containers 4 fall through an opening in a base 6.

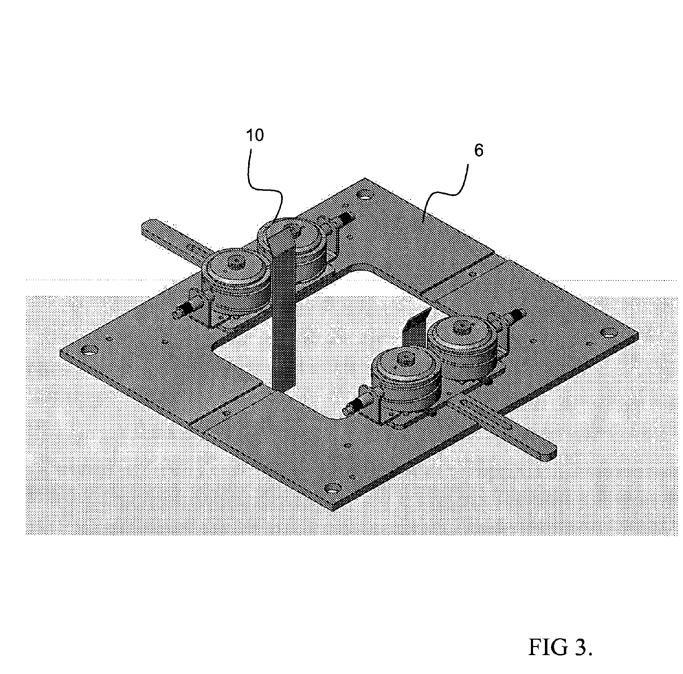

Figure 3 shows two destacking units fastened to the base 6 and having two destacking members each. The destacking member is a destacking screw with a circular outer rim and threads settling on the edge of a container. This device has a total of four destacking members 10, two in each destacking unit. It is clear that by altering the number, location, and size of the destacking members, it is possible to destack container stacks with differing outer dimensions. The material of the containers 4 may be plastic, aluminium, or a corresponding packing material. The shape of the containers may also differ from what is shown. The container may also be round in shape.

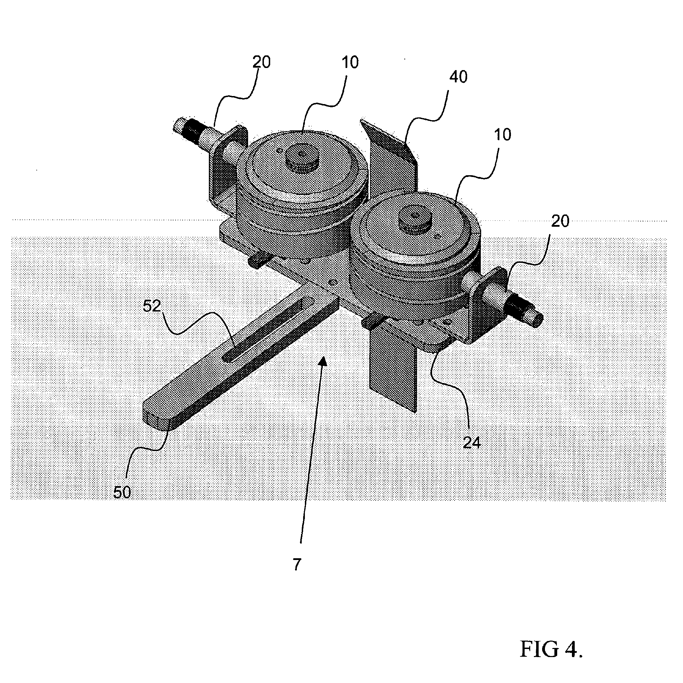

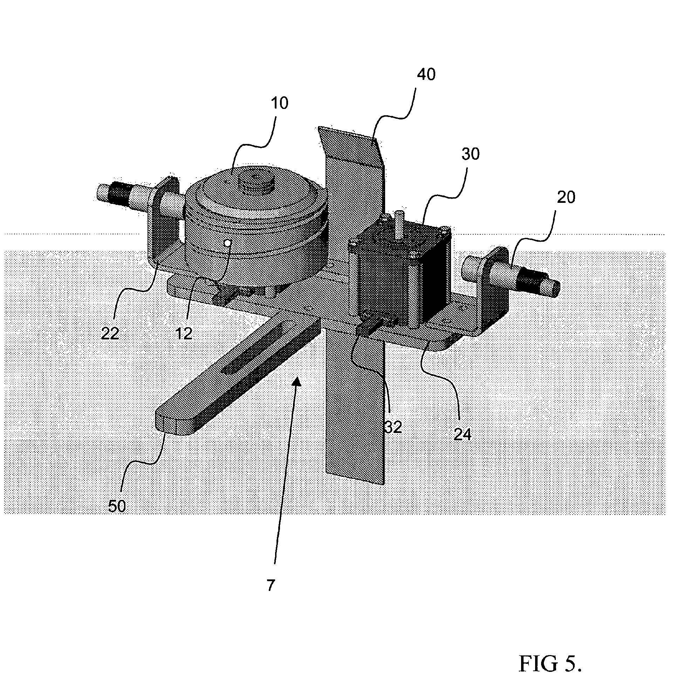

Figure 4 shows one of the two destacking units 7 of the destacking device. The destacking unit 7 has two destacking members 10 fastened on a mounting base 24, which are rotated with stepping motors below them (shown in Figure 5). Both destacking members 10 have a sensor means 20 that detects the location of the destacking member 10 at least once during one rotation. The location and implementation of the sensor means 20 may vary according to the application.

A container controller 40 and moving handle 50 are also fastened to the mounting base 24. The destacking unit 7 may be fastened to the base to be moved through an elongated adjusting opening 52 in the moving handle (50) by means of screw-like fastening means.

In Figure 5, the second destacking member 10 is removed to show how the stepping motor 30 may be located in a space arranged inside the destacking member 10. This way, the size of the destacking unit 7 becomes as small as possible, because the destacking member 10 is fastened directly to the axle of the stepping motor. The stepping motor 30 has a connector 32 for receiving control from a control unit (not shown). Sensors acting as the sensor means 20 receive status information on the destacking member 10 and forward it to the control unit. Here, the sensor means 20 detects the status information by means of an identifier 12 fastened to the destacking member. The sensor means may be an optical, capacitive, or inductive sensor means. The detecting manner of the sensor means depends on the material and shape of the destacking member. The destacking member may be made of metal or plastic, for instance. A metal identifier may easily be added to a plastic destacking member. A configuration detectable with an optical sensor means, for example, may be arranged in a metal destacking member to act as an identifier. The identifier 12 is preferably placed at a location where the destacking member 10 is at its locating position. The locating position refers to a location where the destacking member 10 grips the edge of the container. In a fault situation, the rotating direction of the destacking members is reversed and they are rotated back to the locating position. This way, the control unit may recover from a blockage without the user needing to switch off the destacking device.

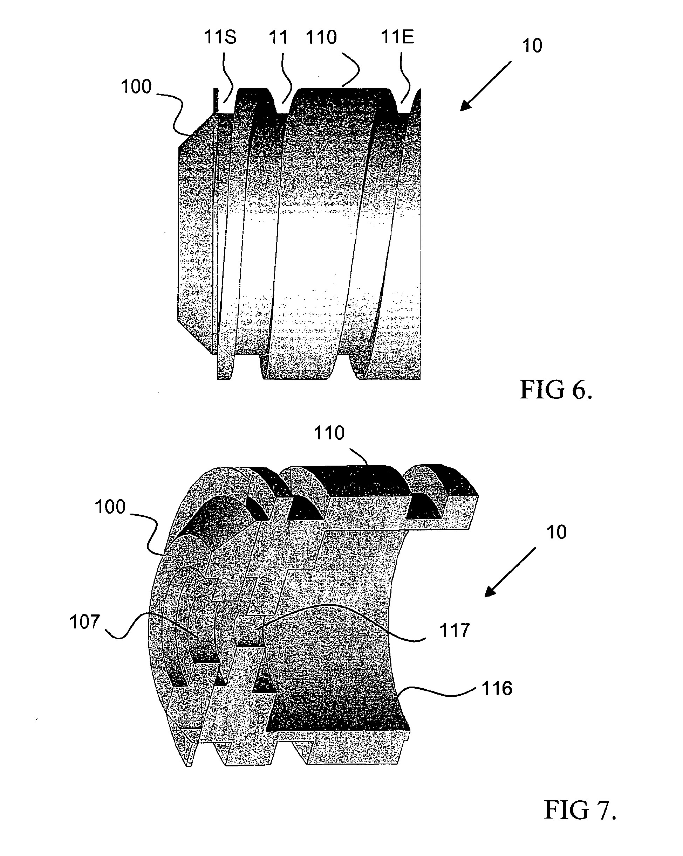

Figure 6 shows a destacking member 10 having on its outer rim a thread-like advancing steering profile 11 for detaching a container from a container stack. The thread-like steering profile 11 comprises a container receiving end 11S and a container discharging end 11E. The container receiving end 11S refers to the part where the thread begins and which contacts the container stack. The container discharging end 11E refers to the part of the destacking member where the thread ends and from which the container falls.

Figure 7 is a sectional view of the destacking member 10 according to Figure 6. The thread is formed in two parts, the gripping part 100 and moving part 110. The parts are concentric in such a manner that they have openings 107 and 117, through which they may be fastened to a rotating axle or the like. Inside the moving part a space 116 is formed for a motor, such as a stepping motor (shown in Figure 5).

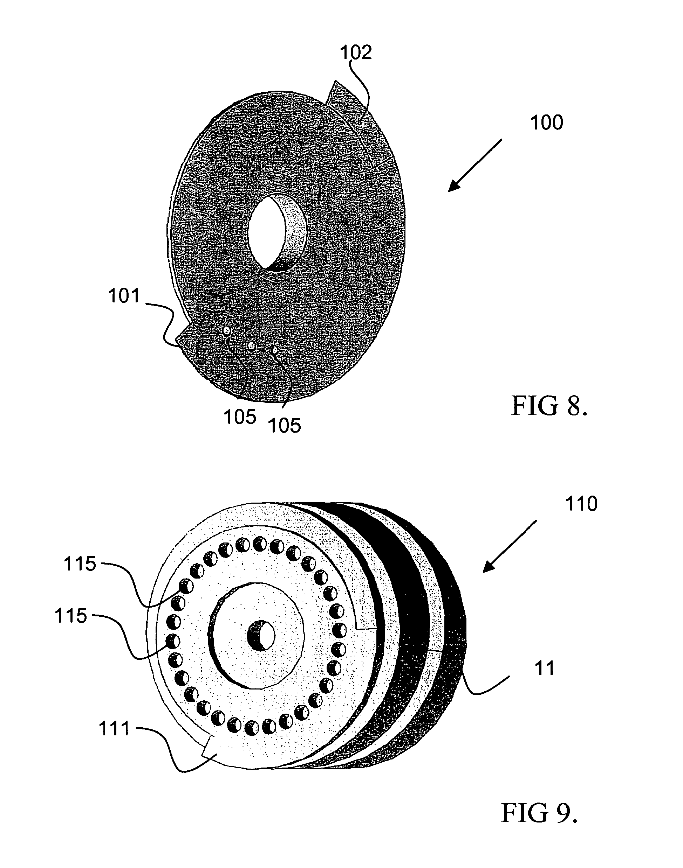

Figure 8 shows the gripping part 100 of the destacking member. The thread-like advancing steering profile of the gripping part 100 is formed on only part of the rim of the destacking member. The steering profile is a flange, one end of which pushes between the containers and the other end moves the container to be transported by the threads of the moving part. Herein, the end pushing between the containers is referred to as the wedge section 101, and the part connecting to the wedge section of the moving part is referred to as the connection section 102. The bottom of the gripping part 110 has alignment members 105 that push into positioning holes 115 of the moving part shown in Figure 9.

Figure 9 shows the moving part of the destacking member. The moving part 110 has a steering profile 11 that runs around the entire circumference of the circle at least once. The length of the steering profile 11 may naturally vary. The top surface of the moving part has positioning holes 115, to which the alignment members of the bottom surface of the gripping part may be placed. The purpose of the alignment members and positioning holes 115 is to lock the gripping part and moving part as required. The number and location of the positioning holes may vary. Their positioning may also be asymmetric in such a manner, for instance, that the parts may only be placed in a few predetermined positions that are suitable for the used containers.

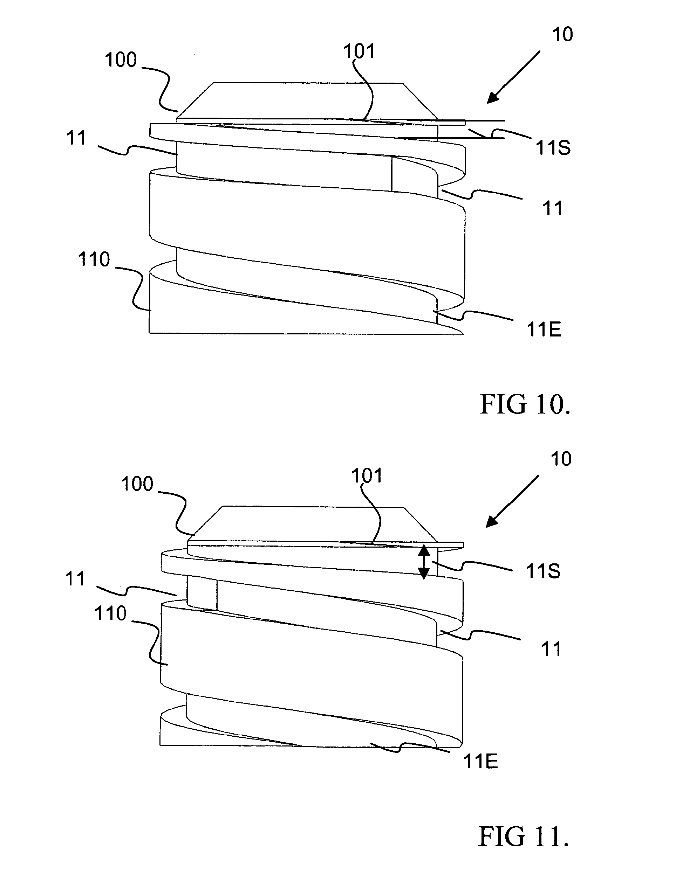

Figure 10 shows a destacking member turned into one adjustment position. The destacking member 10 has a steering profile 11 that advances in a thread-like manner. The container receiving end 11S of the steering profile is formed of a detachably inter-connectable and concentrically rotatable gripping part 100 and moving part 110, the rotation of which parts changes the shape of the container receiving end 11S of the steering profile. The shape of this container receiving end 11S has been changed by rotating the concentric parts 100 and 110 in such a manner that the height of the receiving end steering profile is small, in which case the wedge part 101 of the gripping part 100 may push between the containers of the container stack, in which the distance between gripping surfaces is short. The container moves forward on the thread-like advancing steering profile even though the height of the steering profile increases when proceeding to the lower moving part 110. The container detaches from the destacking member at the container discharging end 11 E of the steering profile.

Figure 11 shows a destacking member turned into a second adjustment position. The destacking member 10 has a thread-like advancing steering profile 11. The container receiving end 11S of the steering profile is formed of a detachably inter-connectable and concentrically rotatable gripping part 100 and moving part 110, the rotation of which parts changes the shape of the container receiving end 11 S of the steering profile. Here, the shape of this container receiving end 11S has been changed in such a manner that the height of the receiving end steering profile is great, in which case the wedge part 101 of the gripping part 100 may push between the containers of the container stack, in which the distance between gripping surfaces is long The container moves forward on the thread-like advancing steering profile when proceeding to the lower moving part 110. The container detaches from the destacking member at the container discharging end 11E of the steering profile.

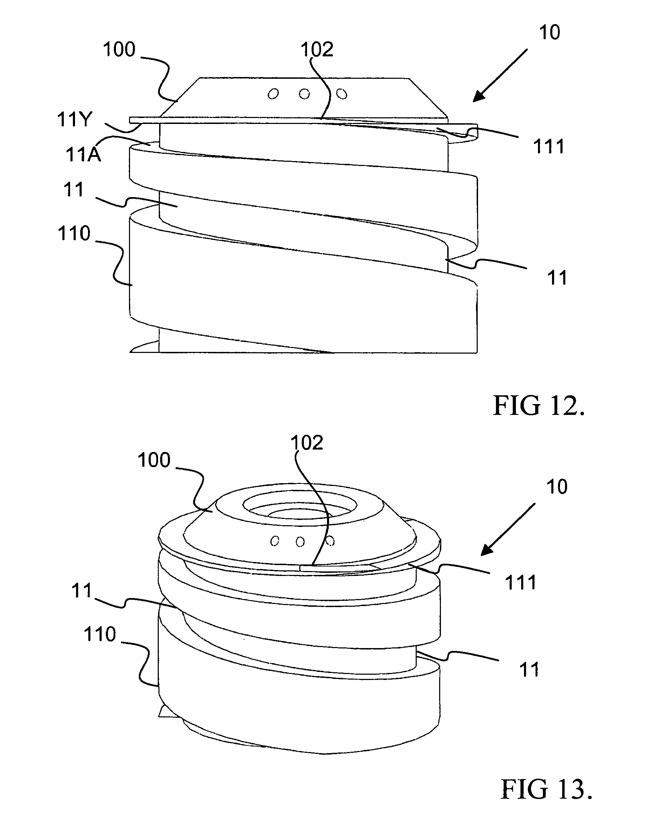

Figures 12 and 13 show the adjustment position of Figure 10 from another direction. The thread-like advancing steering profile 11 is made continuous between two different parts in such a manner that the wedge section 111 of the moving part connects to the connection section 102 of the gripping part. Here, parts 100 and 110 are turned in such a manner that the connection section 102 of the gripping part and the wedge section of the moving part overlap only slightly. The steering profile 11 comprises a bottom surface 11 A and top surface 11 Y, and the rotation of the gripping part 100 and moving part 110 relative to each other alters the distance between the top surface 11Y and bottom 11A of the thread-like advancing steering profile 11 at its container receiving end that the gripping part 100 and moving part 110 form together.

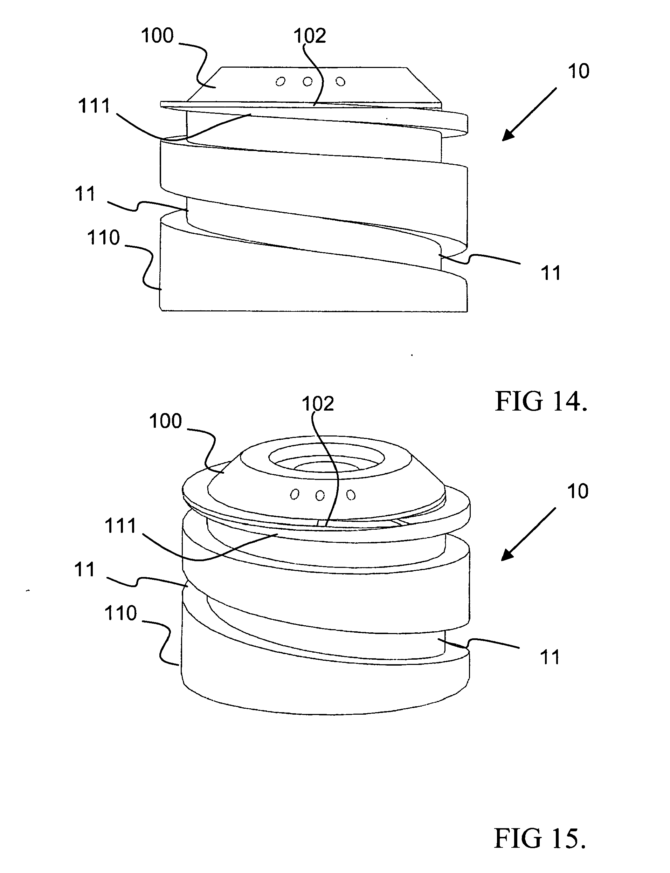

Figures 14 and 15 show the adjustment position of Figure 11 from another direction. The thread-like advancing steering profile 11 is made continuous between two different parts in such a manner that the wedge section 111 of the moving part connects to the connection section 102 of the gripping part. Here, parts 100 and 110 are turned in such a manner that the connection section 102 of the gripping part and the wedge section of the moving part overlap more.

It is obvious to a person skilled in the art that as technology advances, the basic idea of the invention may be implemented in many different ways as claimed. The invention and its embodiments are thus not restricted to the examples described above, but may vary within the scope of the claims.

## Claims

1. A destacking member (10) for destacking a stack of containers, the outer rim of which destacking member (10) has a thread-like advancing steering profile (11) for detaching a container (4) from the stack, the steering profile (11) comprising a container receiving end (11S) and a container discharging end (11E), **characterised in that**
the receiving end (11S) of the steering profile (11) is formed of a detachably inter-connectable and concentrically rotatable gripping part (100) and of a moving part (110), the rotation of which parts relative to each other changes the steering profile at the container receiving end (11S), whereas the moving part (110) comprises a bottom surface (11A) and the rotatable gripping part (100) comprises a top surface (11Y), and the said rotation of the gripping part (100) and moving part (110) relative to each other is arrange to alter the distance between the top surface (11Y) and bottom surface (11A) of the thread-like advancing steering profile (11) at its container receiving end (11S) formed by the gripping part (100) and moving part (110) together.

2. A destacking member as claimed in claim 1, **characterised in that** in the gripping part (100), the thread-like advancing steering profile (11) is formed on only part of the rim of the gripping part (100) of the destacking member.

3. A destacking member as claimed in claims 1 or 2, **characterised in that** the moving part (110) has a steering profile (11) that runs around the entire circumference of the circle at least once.

4. A destacking member as claimed in any one of the preceding claims, **characterised in that** the steering profile of the gripping part (100) formed on only part of the rim of the destacking member comprises:
a wedge section (101) forming a first extreme end of the thread-like advancing steering profile (11) and a connection section (102) connecting to the wedge section (111) of the moving part (110).

5. A destacking member as claimed in any one of the preceding claims, **characterised in that** inside the moving part (110) of each destacking member (10), a space (116) is arranged that is dimensioned to receive a stepping motor (30) rotating the destacking member (10) in such a manner that the destacking member (10) covers at least partly the stepping motor.

6. A destacking member as claimed in any one of the preceding claims, **characterised in that** each destacking member (10) has a sensor means (20) detecting the rotational location of the destacking member.

7. A destacking member as claimed in any one of the preceding claims, **characterised in that** the bottom surface of the gripping part (100) has one or more alignment members (105).

8. A destacking member as claimed in claim 7, **characterised in that** the top surface of the moving part (110) has positioning holes, into which the alignment members (105) on the bottom surface of the gripping part may be placed.

9. A destacking device for destacking a stack of containers, comprising:
at least two motor-driven destacking members (10), on the outer rim of which, there is a thread-like steering profile (11) for detaching a container (4) from a container stack, **characterised in that** the destacking members (10) of a destacking unit are as claimed in any one of the preceding claims 1 to 8.

## Patentansprüche

1. Abstapelelement (10) zum Abstapeln eines Behälterstapels, wobei der Außenrand des Abstapelelements (10) ein gewindeähnliches vortreibendes Lenkprofil (11) zum Lösen eines Behälters (4) vom Stapel aufweist, wobei das Lenkprofil (11) ein Behälteraufnahmeende (11S) und ein Behälterabgabeende (11E) umfasst, **dadurch gekennzeichnet, dass**
das Aufnahmeende (11 S) des Lenkprofils (11) von einem lösbar miteinander verbindbaren und konzentrisch drehbaren Greifteil (100) und von einem beweglichen Teil (110) gebildet wird, wobei die Drehung der Teile zueinander das Lenkprofil am Behälteraufnahmeende (11S) ändert, während der bewegliche Teil (110) eine Unterseite (11A) umfasst und der drehbare Greifteil (100) eine Oberseite (11Y) umfasst, und wobei die Drehung des Greifteils (100) und des beweglichen Teils (110) zueinander so eingerichtet ist, dass der Abstand zwischen der Oberseite (11Y) und der Unterseite (11A) des gewindeähnlichen vortreibenden Lenkprofils (11) an seinem Behälteraufnahmeende (11 S), das vom Greifteil (100) und vom beweglichen Teil (110) zusammen gebildet wird, geändert wird.

2. Abstapelelement nach Anspruch 1, **dadurch gekennzeichnet, dass** im Greifteil (100) das gewindeähnliche vortreibende Lenkprofil (11) nur auf einem Teil des Randes des Greifteils (100) des Abstapelelements ausgebildet ist.

3. Abstapelelement nach Anspruch 1 oder 2, **dadurch gekennzeichnet, dass** der bewegliche Teil (110) ein Lenkprofil (11) aufweist, das rund um den gesamten Umfang des Kreises mindestens einmal herumläuft.

4. Abstapelelement nach einem der vorhergehenden Ansprüche, **dadurch gekennzeichnet, dass** das Lenkprofil des Greifteils (100), das nur auf einem Teil des Randes des Abstapelelements ausgebildet ist, Folgendes umfasst:
einen Keilabschnitt (101), der ein erstes äußeres Ende des gewindeähnlichen vortreibenden Lenkprofils (11) bildet, und einen Verbindungsabschnitt (102), der eine Verbindung zum Keilabschnitt (111) des beweglichen Teils (110) herstellt.

5. Abstapelelement nach einem der vorhergehenden Ansprüche, **dadurch gekennzeichnet, dass** im Inneren des beweglichen Teils (110) von jedem Abstapelelement (10) eine Aussparung (116) vorgesehen ist, die so bemessen ist, dass ein Schrittmotor (30) zum Drehen des Abstapelelements (10) so aufgenommen werden kann, dass das Abstapelelement (10) den Schrittmotor zumindest teilweise abdeckt.

6. Abstapelelement nach einem der vorhergehenden Ansprüche, **dadurch gekennzeichnet, dass** jedes Abstapelelement (10) ein Sensormittel (20) zum Erfassen der Drehposition des Abstapelelements aufweist.

7. Abstapelelement nach einem der vorhergehenden Ansprüche, **dadurch gekennzeichnet, dass** die Unterseite des Greifteils (100) ein oder mehrere Ausrichtungselemente (105) aufweist.

8. Abstapelelement nach Anspruch 7, **dadurch gekennzeichnet, dass** die Oberseite des beweglichen Teils (110) Positionierlöcher aufweist, in die die Ausrichtungselemente (105) auf der Unterseite des Greifteils eingefügt werden können.

9. Abstapelvorrichtung zum Abstapeln eines Behälterstapels, umfassend:
mindestens zwei motorisierte Abstapelelemente (10), auf deren Außenrand sich ein gewindeähnliches Lenkprofil (11) zum Lösen eines Behälters (4) von einem Behälterstapel befindet, **dadurch gekennzeichnet, dass** die Abstapelelemente (10) einer Abstapeleinheit einem der vorhergehenden Ansprüche 1 bis 8 entsprechen.

## Revendications

1. Elément de désempilage (10) pour désempiler une pile de récipients, le bord extérieur dudit élément de désempilage (10) ayant un profil de direction d'avancement par filetage (11) pour détacher un récipient (4) de la pile, le profil de direction (11) comprenant une extrémité de réception de récipient (11 S) et une extrémité d'évacuation de récipient (11 E), **caractérisé en ce que**
l'extrémité de réception (11S) du profil de direction (11) est constituée d'une partie de préhension pouvant être interconnectée de manière détachable et pouvant tourner de manière concentrique (100) et d'une partie mobile (110), la rotation desdites parties l'une par rapport à l'autre changeant le profil de direction à l'extrém ité de réception de récipient (11 S), dans lequel
la partie mobile (110) comprend une surface inférieure (11A) et la partie de préhension pouvant tourner (100) comprend une surface supérieure (11Y), et ladite rotation de la partie de préhension (100) et de la partie mobile (110) l'une par rapport à l'autre est agencée pour modifier la distance entre la surface supérieure (11Y) et la surface inférieure (11A) du profil de direction d'avancement par filetage (11) à son extrémité de réception de récipient (11 S) formée ensemble par la partie de préhension (100) et la partie mobile (110).

2. Elément de désempilage selon la revendication 1, **caractérisé en ce que**, dans la partie de préhension (100), le profil de direction d'avancement par filetage (11) est constitué sur une seule partie du bord de la partie de préhension (100) de l'élément de désempilage.

3. Elément de désempilage selon la revendication 1 ou 2, **caractérisé en ce que** la partie mobile (110) a un profil de direction (11) qui fait le tour de toute la circonférence du cercle au moins une fois.

4. Elément de désempilage selon l'une quelconque des revendications précédentes, **caractérisé en ce que** le profil de direction de la partie de préhension (100) formé sur seulement une partie du bord de l'élément de désempilage comprend :
une section de coin (101) formant une première extrémité extrême du profil de direction d'avancement par filetage (11) et une section de liaison (102) se reliant à la section de coin (111) de la partie mobile (110).

5. Elément de désempilage selon l'une quelconque des revendications précédentes, **caractérisé en ce que**, à l'intérieur de la partie mobile (110) de chaque élément de désempilage (10), il est agencé un espace (116) dimensionné pour recevoir un moteur pas à pas (30) faisant tourner l'élément de désempilage (10) de telle manière que l'élément de désempilage (10) couvre au moins partiellement le moteur pas à pas.

6. Elément de désempilage selon l'une quelconque des revendications précédentes, **caractérisé en ce que** chaque élément de désempilage (10) comprend un moyen détecteur (20) détectant l'emplacement de rotation de l'élément de désempilage.

7. Elément de désempilage selon l'une quelconque des revendications précédentes, **caractérisé en ce que** la surface inférieure de la partie de préhension (100) comporte un ou plusieurs éléments d'alignement (105).

8. Elément de désempilage selon la revendication 7, **caractérisé en ce que** la surface supérieure de la partie mobile (110) comporte des trous de positionnement, dans lesquels les éléments d'alignement (105) sur la surface inférieure de la partie de préhension peuvent être placés.

9. Dispositif de désempilage pour désempiler une pile de récipients, comprenant :
au moins deux éléments de désempilage entraînés par moteur (10), sur le bord extérieur desquels se trouve un profil de direction par filetage (11) pour détacher un récipient (4) d'une pile de récipients, **caractérisé en ce que** les éléments de désempilage (10) d'une unité de désempilage sont selon l'une quelconque des revendications 1 à 8.
